# EUROPEAN PATENT SPECIFICATION

(11) **EP 4 217 760 B1**
(45) Date of publication and mention of the grant of the patent: **28.10.2026**
(21) Application number: 21787314.0
(22) Date of filing: 27.09.2021
(51) Int. Cl.: G01S 13/88, G01S 13/89, G01S 13/86, G01S 7/41, G01S 7/04, G01V 5/22, G01V 8/00, G01V 11/00

(54) **SCREENING DEVICE AND METHOD FOR SCREENING A PERSON**
SCREENING-VORRICHTUNG UND SCREENING-VERFAHREN FÜR EINE PERSON
DISPOSITIF ET PROCÉDÉ D'INSPECTION PERMETTANT D'INSPECTER UNE PERSONNE

(30) Priority: 28.09.2020 NL 2026564
(43) Date of publication of application: 02.08.2023
(73) Proprietor: Scarabee Systems & Technology B.V., 2132 MX Hoofddorp (NL)
(72) Inventor: TAN, Michael Kim, 2132 MX HOOFDDORP (NL)
(74) Representative: EP&C
(86) International application number: PCT/EP2021/076531
(87) International publication number: WO 2022/064047

(56) References cited:
- WO-A1-2015/077167
- US-A- 5 124 554
- US-A1- 2004 090 359
- US-A1- 2007 133 743
- US-A1- 2016 116 581
- US-A1- 2016 216 371
- US-B2- 7 660 388

## Description

The present invention relates to a screening device and screening method for screening a person.

Screening persons may be performed for security reasons. The screening of the persons may for example check if a person carries with him or her any items that may evoke danger, such as a knife, scissor or other metal object, an arm such as a fire arm, an explosive, etc.

Screening persons may be performed at a variety of locations, for example at an entrance of a building, theatre, at a railway station, an airport, etc.

The screening may involve plural persons that are to be screened. Delays and waiting ques may be avoided on the one hand, while available resources (screening security personnel, screening apparatuses, square meters of building floor space, etc.) may be required to be minimized on the other hand. Moreover, a risk of erroneous screening outcomes is to be minimized.

When screening a person, traditionally, use has been made of metal detection portals. More recent developments employ radio wave scanners, such as millimetre wave scanners or terahertz scanners to scan the person for objects that may be associated with a security risk. With these types of scanners, the person is required to enter a cabin that is at least partly surrounded by a wall. The cabin may e.g. be closed by a door or slide so as to prevent the passenger from walking through before being cleared. In case the scanning process identifies a risk, e.g. an item carried by the person, or a malfunction of part of the scan, an alarm is generated that needs to be resolved and delays may occur.

US2016116581A1 discloses a walk-through screening station which scans individuals to detect contraband such as a concealed weapon or improvised explosive device, IED, using ultra wideband, UWB, radar sensing and imaging systems employing wafer scale active array antennas.

US2004090359A1 discloses systems, methods, devices, and apparatus to interrogate a clothed individual with electromagnetic radiation to determine if a concealed object is being carried.

US2016216371A1 discloses systems and methods for scanning objects and persons, for example, persons in security gates, by means of microwave radiation.

WO2015077167A1 discloses a barrier for the protection of a crowd, by evaluating each individual for any concealed prohibited items.

The invention is defined in apparatus claim 1 and in corresponding method claim 16.

The invention aims to avoid or reduce delays in the screening of the person.

According to the invention, there is provided a screening device for screening a person, the screening device comprising:
- a cabin comprising a wall at least partly enclosing an inner space,
- a sensor on at least part of the surface of the wall facing the inner space, the sensor being configured to sense the person present in the inner space, and
- a control device connected to the sensor and configured to:
   operate the sensor to sense the person residing in the inner space;
   wherein the screening device further comprises a projector projecting an image into the inner space to be viewed by the person, wherein the control device is further connected to the projector and configured to drive the projector to project instructions to the person, associated with the operating of the sensor.

The wall enclosing the inner space forms a cabin in which the person is to be screened. The cabin may be provided with one or two openings for the person to enter and/or exit the cabin, e.g. an entry opening at an entry side and an exit opening at an exit side, the openings may be closable by a respective door, slide, etc. The sensor on at least part of a surface of the wall facing the inner space may be any type of sensor, e.g. a radio wave scanner such as a millimetre wave scanner, a terahertz scanner, etc. The sensor may be stationary in respect of the wall or may be movable on the surface of the wall, e.g. rotatable around the person to scan the person from circumferential angles.

The projector projects an image into the inner space, the projector may for example be arranged in or at a ceiling of the cabin, e.g. above the space in the cabin where the person is to present him or herself for screening, and may be any type of projector. For example, the projector may project an image onto the wall of the cabin. As another example, the projector may, e.g. in a holographical way, project an image into the space. For example, the projector may comprise a 3D laser projector or other 3D projector to project the image into the space.

The control device may comprise any suitable controller, such as a microcontroller, microprocessor, PLC (programmable logic controller), etc., provided with suitable program instructions to perform the described steps.

The control device drives the sensor to sense the person residing in the inner space. The sensor data provided by the sensor may be processed locally or may be sent to an (e.g. local or remote) sensor data processing device. For example, sensor data formed by radio wave signals may be processed and an image derived therefrom. The image may for example be sent to an evaluation data processing device, which may evaluate the image to identify any risks, such as items (knifes, arms, etc.) carried by the person. The evaluation data processing device may be e.g. be self learning, e.g. comprise a neural network or other intelligent program architecture that establishes if any items may be identified in the image that may invoke a risk. The self learning evaluation data processing device may for example be learned from training data comprising images in which potentially risk full items have been identified by a human operator. The sensor data processing device, evaluation data processing device may be comprised in the control device or may form separate, e.g. remote devices.

In order to provide that the person adheres to the screening, the control device drives the protector to project instructions to the person, associated with the operating of the sensor. Thereby, the person is provided with instructions what to do, so as to provide that the person adheres to the screening process. For example, the person may be requested to empty his or her pockets, to put items, such as hand luggage, keys, wallet, coat, vest, etc. in a tray. As another example, the person may be requested to stand in a predetermined location in the cabin and/or to adhere to a predetermined position, e.g. to stretch his or her arms upwards. As another example, the person may be informed that the scanning has been completed and may be instructed to leave the cabin.

As a result, delays, such as may be evoked in prior art solutions, may be prevented. In prior art solutions, an operator may present himself at the cabin, the person may be prompted by the operator to step out of the cabin or provide instructions to the person how to proceed. This may result in delay, as the person may first be requested to step out of the cabin, be provided with instructions, or be requested to e.g. remove items from their pockets, etc. and then be instructed to re-enter the cabin for a repeated screening. Compared to the traditional detection portals, this delay may even be larger: for security reasons, it may be avoided that an operator enters the confined space of the cabin where a person to be screened resides, thus requiring the person (which may be mentally focussed on following up written instructions in the cabin, may be stressed, etc.) to pay attention to an operator outside of the cabin, may require to open the door or slide enclosing the cabin, and may require instructing the person to step out of the cabin, etc.

Moreover, as the image is projected into the cabin, i.e. into the inner space of the cabin, placing a display panel in the cabin may be omitted. As a result, interference by such as display panel with the sensor may be avoided. Various causes of interference may be avoided. On the one hand, the display panel itself, forming a physical structure, may obstruct radio waves emitted by the sensor thus obstructing a scanning of the person. On the other hand, the display panel, such as an LCD panel or LED panel, may itself emit radiofrequency signals, e.g. resulting from driving signals in the panel associated with the driving of pixels of the display. Such digital data processing and data communication in the display panel may result in an emission of radio frequency signals that could interfere with the sensing of the person, in particular in case radio waves are employed for sensing the person.

In an embodiment, the control device is further configured to
- derive a location of an object on the person from the sensor data, and
- control the projector to display the location of the object on the person.

The control device may, when detecting an object in the scan and associated processing, derive a location of the object. The control device may then drive the projector to display the location of the object. The person may then be instructed to remove the object, e.g. put the object in a bin or tray, thereby displaying the location of the object to the person, so as to clarify to the person what the person is expected to do. The object may be any security relevant object, such as a metal object, a weapon, an explosive, a liquid, etc. Furthermore, the object may be any object that the person could have forgotten to remove, such as a wallet, key, smartphone, etc., and which object may e.g. interfere with the scanning. As the location of the object is indicated to the person, the person may be able to remove the object as instructed, without any further live operator intervention.

To visually instruct the person where an object has been localized, an artificial reality mirror image may be generated which displays a mirror image of the person including the object. Thereto, the sensor further comprises a camera directed to a desired position of the person in the inner space, the camera being connected to the control device to transmit camera image data to the control device, and wherein the control device is configured to generate a mirror image of the person from the camera image data, to create a fused image of the person by fusing the object at the derived location into the mirror image of the person and to control the projector to display the fused image of the person. Hence, a mirror image of the person may be presented to the person, in which the object location has been fused. The object may e.g. be indicated by a pictogram displaying a type of object as detected, e.g. a pictogram of a key, wallet, phone, etc., or may be indicated by a shape corresponding to a shape of the object as sensed by the sensor.

In an embodiment, the screening device further comprises the camera configured to generate image data, a gesture sensor sensing a gesture of the person and configured to generate gesture data and a motion sensor recording a movement of the person and configured to generate motion data, wherein the control device is configured to perform a risk assessment from a combination of the sensor data, the camera image data, the gesture data and the motion data and to generate a warning message based on the risk assessment As a result, a behaviour of the person, e.g. deviations of common behaviour, may be detected and assessed automatically.

The control device may be configured to perform the risk assessment using a self-learning system, the self learning system having been trained using a training dataset additionally comprising operator assessment responsive to the sensor data, camera image data, gesture data and motion data. Thereby, an experienced operator may train the self learning system.

In an embodiment, the screening device further comprises a footwear sensor on at least part of the surface of a floor of the cabin, the footwear sensor being configured to sense the person's footwear present in the inner space . The footwear sensor may be configured to sense a position of the footwear, a presence of metal, liquid, or any potentially risk invoking item or substance. The control device may further be configured to operate the footwear sensor to sense the footwear of the person, and to drive the projector to project instructions to the person, associated with the operating of the footwear sensor. The footwear sensor may for example be formed by a micrometer of millimeter wave scanner provided with an antenna in or on a floor of the inner space. The footwear sensor may e.g. employ quadrupole resonance. Quadrupole resonance, also identified as Nuclear Quadrupole Resonance spectroscopy or NQR may be understood as a chemical analysis technique related to nuclear magnetic resonance (NMR). Unlike NMR, NQR transitions of nuclei can be detected in the absence of a magnetic field, and for this reason NQR spectroscopy is referred to as "zero Field NMR". The NQR resonance is mediated by the interaction of the electric field gradient (EFG) with the quadrupole moment of the nuclear charge distribution. Unlike NMR, NQR is applicable only to solids and not liquids, because in liquids the quadrupole moment averages out. Because the EFG at the location of a nucleus in a given substance is determined primarily by the valence electrons involved in the particular bond with other nearby nuclei, the NQR frequency at which transitions occur is unique for a given substance. A particular NQR frequency in a compound or crystal is proportional to the product of the nuclear quadrupole moment, a property of the nucleus, and the EFG in the neighborhood of the nucleus. It is this product which is termed the nuclear quadrupole coupling constant for a given isotope in a material and can be found in tables of known NQR transitions. In NMR, an analogous but not identical phenomenon is the coupling constant, which is also the result of an internuclear interaction between nuclei in the analyte.

The footwear sensor may enable to screen the person while the person keeps his or her footwear (e.g. shoes, sandals) on. Measurement data obtained by the footwear sensor may e.g. be processed either by the footwear sensor itself (e.g. by a processor or image processor thereof), or by the control device. In case the scan of the footwear by the footwear sensor and associated processing of the measurement data results in a detection of an object that may be associated with a risk, the control device may drive the projector to project instructions to the person, e.g. to remove his/her shoes and present the shoes for scanning, e.g. by a hand luggage scanning apparatus of the screening device. As a result, in case the measurement by the footwear sensor and associated processing of measurement data indicates a potential risk, the person may be instructed to remove the footwear. In case the screening device is equipped with a hand luggage scanning apparatus, the person may be instructed to present the footwear to the hand luggage scanning apparatus, e.g. at a hand luggage feeding tray thereof. Accordingly, the screening process may proceed to a following step, namely the screening of the footwear by e.g. the hand luggage scanning apparatus, without the need for an immediate intervention or action by an operator.

In order to provide operator assistance to the person, in an embodiment, the control device is configured to
- establish a connection to an operator console,
- output an instruction to an operator at the operator console to communicate to the person, and
- control the projector to display an image of the operator (e.g. a video image of the operator) at the operator console.

As the operator assistance is provided via the display, the person in the cabin can be provided with (e.g. audio visual) instructions by the operator. The person may communicate with the operator using a camera and microphone comprised in the security device, i.e. in the cabin, therefore being able to communicate with the operator without requiring the person to leave the cabin. On the one hand, the assistance may be available faster, as the operator does not need to walk to the cabin, and on the other hand, the operator may, from the operator console, provide assistance and/r supervise plural security devices, thus potentially enhancing efficiency.

In an embodiment, the control device is configured to
- derive from the sensor data a location of an object on the person,
- transmit the location of the object on the person to the operator console, and
- transmit instructions to the operator console requesting the operator to explain to the person the location of the object.

The operator may hence be assisted to remotely asses a cause of non-compliance, e.g. an object carried by the person. The location of the object is sent to the operator console and displayed at the operator console. The operator can then explain to the person where an object has been found in the scan, and what the person has to do. To assist the remote operator, the control device may transmit to the operator console a video stream showing the entire process from entering the cabin up to the event that triggered the call for the remote operator to assist the person

In order to provide that operator assistance may requested in various circumstances, in an embodiment, the control device is configured to output the instruction to the operator in case a criterion is fulfilled, the criterion comprising at least one of:
- the person initiating an operator contact request (e.g. the person not knowing what to do, getting confused, facing an error message, panicking, etc., )
- the control device establishing that a pre-set screening time has elapsed (e.g. several attempts have been carried out unsuccessfully),
- the control device establishing that a presence of an object has been established.

In an embodiment, the sensor comprises a radio wave scanner comprising a radio wave antenna array, the radio wave antenna array covering at least part of the surface of the wall behind the projected image. As the projected image may not obstruct the radio wave transmission from the antenna array, blocking or attenuating the radio waves from the antennas behind the projected image may be avoided, thereby enabling to scan the person making use of all antennas and potentially avoiding blind spots in the scan of the person, as "shadow" effects by a display panel interposed between one or more of the antennas and the person, may be avoided.

In an embodiment, the projector is configured to project a two dimensional image on the wall of the cabin or a three dimensional image in the inner space.

In an embodiment, the screening device further comprises an object depositing tray and wherein the instructions comprise instructions to deposit the object in the object depositing tray. The tray may be stationary, to allow the person to reclaim the deposited object after the scanning, or may be conveyed by a conveyor, for example to a hand luggage screening system, as described in more detail below. In case hand luggage inspection techniques are used that require shielding from the person, such as X-ray inspection, the hand luggage may be conveyed away from the interior of the cabin. Otherwise infrared, video, etc. inspection techniques may be applied onto the hand luggage.

In an embodiment, the screening device further comprises a hand luggage screening apparatus, and a conveyor to convey the hand luggage from the cabin to the hand luggage screening apparatus, the control device being configured to drive the conveyor to convey the hand luggage deposited in the object depositing tray to the hand luggage screening apparatus, to drive the hand luggage screening apparatus to screen the hand luggage, and drive the conveyor to convey the hand luggage back into the cabin.

In an embodiment, the screening device further comprises an identification device, the control device being configured to identify the person using identification data from the identification device, and associate the depositing tray to the identified person. Hence, in case the tray holding the object is conveyed away by the conveyor, the association of the tray to the person may enable to convey the tray to a reclaiming station where the corresponding person has identified himself/herself. The identification device may comprise a camera, a passport scanner, a boarding pass scanner, etc. The identification may be performed using e.g. biometric data, such as an image of a face or iris of the person

In an embodiment, the control device is configured to drive the display device to provide instructions to the person to adhere to a predetermined screening sequence. Thereby, an efficient screening may be performed, even with persons that are not familiar with the procedure yet. The screening process may for example comprise the steps of the person identifying himself or herself at an identification station, the person removing a coat or jacket, the person placing coat, jacket in a tray, the person emptying his/her pockets and depositing the items in the tray, the person taking a predetermined position (e.g. marked on the floor or displayed by the projector), the person reaching with his/her arms upward, the person being scanned by the sensor, the person being informed (e.g. by a message displayed by the projector) that the scan has succeeded, the person being prompted to leave the cabin, etc.

The sensor may further comprises a camera, the control device is configured to process an image form the camera to derive a progress of the screening of the person therefrom, to compare the derived progress of the screening to the predetermined screening sequence, and to derive the instructions provided to the person from the comparison of the derived progress to the predetermined screening sequence. Image processing and a self-learning system may be employed to assess progress. The self-learning system may initially be trained using images (such as video or still images) and associated operator input.

In an embodiment, the screening device further comprises:
- a hand luggage screening apparatus configured to scan the hand luggage deposited by the person, wherein the hand luggage screening apparatus comprises a primary scanner and an X-ray diffraction scanner, and
   wherein the control device is configured to operate the hand luggage screening apparatus to
- scan the hand luggage by the primary scanner to generate primary scanner output data associated with the scan of the hand luggage,
- determine an area of interest of the hand luggage from the primary scanner output data,
- operate the X-ray diffraction scanner to scan the area of interest of the hand luggage to generate X-ray diffraction output data associated with the scan of the hand luggage by the X-ray diffraction scanner,
- process the primary scanner output data and the X-ray diffraction output data to determine if an alarm signal is to be generated, and
- output the alarm signal if generated.

The primary scanner may e.g. comprise an X-ray scanner, e.g. a CT (Computer Tomography) scanner. The primary scanner may e.g. identify potentially relevant objects, such as liquids, that may require further inspection. In case a potentially relevant object is identified in the output data (image data) of the primary scanner, an area of interest may be marked in an image of the hand luggage, the area of interest covering or coinciding with the potentially relevant object. The area of interest may hence relate to a part of the hand luggage or to the hand luggage itself. Accordingly, the X-ray diffraction scanner may be operated to scan the area of interest. Using X-ray diffraction scanning, a material of the potentially relevant object may be determined based on thee diffraction pattern of X-rays radiated onto the area of interest. In case of potentially hazardous materials, the control device may generate and output an alarm signal, e.g. to an operator console to enable an operator to take appropriate actions.

In an embodiment, the screening device further comprising:
a first identification station configured to request a person to present a token,
a hand luggage depositing station configured to collect hand luggage deposited by the person,
the first identification station being associated with the hand luggage depositing station,
a hand luggage screening system configured to screen the hand luggage,
a hand luggage reclaiming station, downstream of the hand luggage screening system,
configured to reclaim the hand luggage deposited by the person,
a second identification station being associated with the hand luggage reclaiming station,
the screening device forming a passage for the person from the hand luggage depositing station to the hand luggage reclaiming station, and
a hand luggage conveying system configured to convey the hand luggage from the hand luggage depositing station via the hand luggage screening apparatus to the hand luggage reclaiming station,
the control device further being configured to:
   read the token presented by the person at the first identification station;
   associate the presented token to the hand luggage deposited by the person at the hand luggage depositing station;
   upon the person having been screened by the screening device, read the token presented by the person at the second identification station at the reclaiming station,
   control the hand luggage conveying system to convey the hand luggage associated with the token to the hand luggage reclaiming station.

The first identification station may request any suitable token, such as a passport, driving license or other identification document, a boarding pass, airline ticket, etc. In an embodiment, the token comprises biometric data, such as facial recognition or iris scan.

The hand luggage depositing station collects hand luggage deposited by the person, the first identification station being associated with the hand luggage depositing station so as to associate the hand luggage as deposited to the person. The hand luggage may for example be deposited in a tray provided with an identification, such as an RF identification or radio frequency identification, to associate the tray carrying the hand luggage to the person.

The hand luggage may then be conveyed to the hand luggage screening system to screen the hand luggage,

The person then proceeds to the screening device as disclosed in the present document.

A hand luggage reclaiming station is provided downstream of the hand luggage screening system, to enable the person reclaim the hand luggage deposited by the person.

In order to identify which hand luggage, i.e. which tray to return to the person, a second identification station is provided and being associated with the hand luggage reclaiming station. As the screening device forms a passage for the person from the hand luggage depositing station to the hand luggage reclaiming station, the person can only reach the reclaiming station once having been screened by the screening device.

The hand luggage conveying system conveys the hand luggage from the hand luggage depositing station via the hand luggage screening apparatus to the hand luggage reclaiming station, and after the person having been screened by the screening device, the person may identify as the second identification station causing the hand luggage conveying system to convey the hand luggage associated with the token to the hand luggage reclaiming station for reclaiming by the person.

The first and second identification devices, the hand luggage depositing station, hand luggage screening system, hand luggage conveying system and the hand luggage reclaiming station may be arranged outside of the cabin of the screening device.

In an embodiment, the screening device comprises
plural hand luggage reclaiming stations, and
wherein the control device is configured to designate one of the plural hand luggage reclaiming stations to the token, to control the hand luggage conveying system to convey the hand luggage associated with the token to the designated one of the plural hand luggage reclaiming stations and to output instructions to the person having passed the screening device and presenting the token to collect the hand luggage associated with the token at the designated one of the plural hand luggage reclaiming stations.

The screening device may further comprise plural hand luggage depositing stations and associated first identification stations, to further increase a throughput. The person may hence be directed to an available, free depositing station and associated first identification station, then proceed to be screened by the screening device, following which the person may recollect the hand luggage at one of the reclaiming stations. In an embodiment, the person proceeds to a free reclaiming station on his/her own initiative, and identifies, following which the corresponding hand luggage is conveyed to the reclaiming station. Alternatively, the person may be instructed, e.g. on a display, to which one of the reclaiming stations to proceed. When using plural reclaiming stations and optionally plural depositing stations, the cabin of the person screening device(s) and the hand luggage screening apparatus(es) may be used at an optimum efficiency, there enabling to reach a maximum flow of persons and hand luggage per cabin of the screening device respectively per hand luggage screening apparatus.

In an embodiment, the screening device further comprises the object depositing tray and wherein the control device is configured to control the hand luggage conveying system to convey the object deposited in the object depositing tray to the designated one of the plural hand luggage reclaiming stations. Accordingly, the screening device may further comprise an identification device to scan the token. The depositing tray may then be associated to the identified person. Hence, in case the tray holding the object is conveyed away by the conveyor, the association of the tray to the person may enable to convey the tray to a reclaiming station where the corresponding person has identified himself/herself.

In an embodiment, the screening device comprising a hand luggage depositing station, a hand luggage reclaiming station, a first hand luggage screening apparatus, a second hand luggage screening apparatus and the hand luggage conveying system to convey the hand luggage from the hand luggage depositing station to either one of the first and the second hand luggage screening apparatuses and from to either one of the first and the second hand luggage screening apparatuses to the hand luggage reclaiming station, wherein the conveying system comprises a shielded hand luggage conveying path extending between the first and second hand luggage screening apparatuses, wherein the hand luggage depositing station loads into the shielded hand luggage conveying path via a loading port having a conveying direction perpendicular to a loading conveying direction between the first and second hand luggage screening apparatuses, wherein the shielded hand luggage conveying path discharges to the hand luggage reclaiming station via a discharging port having a discharging conveying direction perpendicular to a conveying direction between the first and second hand luggage screening apparatuses and wherein radiation shields configured to shield radiation generated by the first and second hand luggage screening apparatuses are arranged at the loading port and at the discharging port.

The hand luggage screening apparatuses may inspect the luggage using X-ray radiation. For safety, the X-ray radiation is to be shielded from persons. Shielding flaps are used both at an entry and an exit of the hand luggage screening apparatus. In order to provide shielding, even when a following tray is conveyed into the hand luggage screening apparatus, resp. a previous tray Is conveyed out of the hand luggage screening apparatus, plural shielding flaps are used, e.g. 3 flaps at each opening. As the trays that carry the hand luggage are to pass the shielding flaps, items of hand luggage may be swiped out of the tray by the flaps. Furthermore, the flaps may cause a tray to be held back, e.g. in case the tray is loaded with low weight hand luggage or in case a voluminous item in the tray is held back by the flaps.

The shielded conveying path between the hand luggage screening apparatuses may enable to omit the shielding flaps at the hand luggage screening apparatuses, hence may thereby mitigate the problems associated with the prior art flaps. In order to prevent any remaining leakage of radiation at the loading port or discharging port, radiation shields, such as lead curtains, may be provided at the ports.

The screening device according to the present aspect may be comprised in the screening device as described above, however may also be provided as such.

The radiation shields may be lead curtains and shielding flaps at the first and second hand luggage screening apparatuses may be omitted.

To provide further shielding at the loading and discharging ports, the loading port comprises a loading port shield extending along the loading direction and wherein the discharging port comprise a discharging port shield extending along the discharging direction.

To provide load balancing of the screening devices, i.e. to distribute the trays in a balanced way over the first and second screening apparatuses, the first and second hand luggage screening apparatuses may be bi-directional and the shielded hand luggage conveying path may bi-directional, so that the hand luggage may be offered to either one of the screening devices.

According to a further aspect of the invention, there is provided a method of operating a screening system comprising the screening device according to the invention,
wherein the screening device is further configured to operate at at least two different detection rates,
the method comprising:
   - defining a screening system detection rate, the screening system detection rate defining a required detection rate of the screening system;
   - selecting one of the detection rates of the screening device to comply with the screening system detection rate; and
   - sending instructions to the control device of the screening device to operate at the selected detection rate so as to comply with the screening system detection rate.

The screening system detection rate defines a rate at which security risks are to be detected. The rate may for example be defined as an overall detection rate for a predefined (test) population of persons equipped with predefined hazardous material. Alternatively, the rate may be defined as a rate per type of hazard, e.g. a rate for explosives, a rate for weapons, etc. The screening system may comprise the screening devices supplemented by other screening equipment and/or procedures. For example, the screening system may further comprise other detection devices, such as camera's, radar, etc. and/or a risk profiling computer device to assign a risk profile per person. The risk profiling computer device may e.g. make use of artificial intelligence and be provided with a variety of data relating to a person, e.g. an age, an occupation, camera image data, past safety screening results of the same person, etc.

The screening device may be set to different detection rates. A higher detection rate may on the one hand provide a higher rate of detecting hazards. On the other hand, the higher detection rate may provide a higher rate of false alarms or result in additional screenings, e.g. by safety personnel, which reduce a through put of the screening device, e.g. in number of persons per time unit. In view of efficiency and cost, it is intended to balance detection rate and efficiency, in order to meet a required overall detection rate of the system, while keeping efficiency at a highest possible level.

Accordingly, the screening device may be set to different detection rates. Thereto, the control device may adapt e.g. a detection threshold setting an alarm threshold, or may adapt a threshold that defines when a secondary screening is to be performed, or a threshold that defines what object size/type is to be removed from a pocket of a person, etc. Such threshold may relate to a detection rate, in that the threshold may determine in what circumstances to proceed to a further check, alarm, etc. The different detection rates of the screening device may accordingly be implemented by different detection thresholds, etc. One of the detection rates of the screening device may be selected. The detection rate of the screening device in combination with detection rates of further equipment and procedures in the screening system, results in an overall detection rate of the screening system in which the screening device is comprised.

The detection rate of the screening device defines a detection rate of a security hazard to be detected at the person, the hand luggage and/or the footwear of the person. For example, an alarm threshold and/or a secondary detection threshold may be amended.

It is noted that in the present document, the terms scanning, screening, sensing may refer to the same and may hence be interchangeable. Similarly, the terms person and passenger may both refer to a person and may hence be interchangeable in case the person is a passenger. Likewise, the terms object, item, etc. may refer to the same and may hence be interchangeable.

Further features, advantages and effects of the present disclosure may become clear from the appended drawing and corresponding description, showing a non-limiting embodiment, wherein:
Figure 1 depicts a perspective view of a screening device;
Figure 2 depicts another view of the screening device

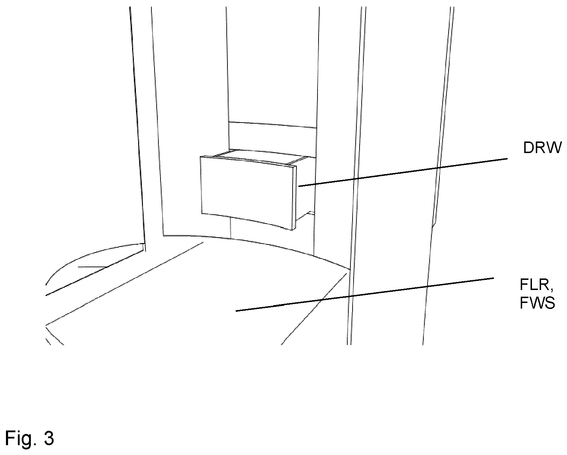

Figure 3 depicts a detailed view of a hand luggage tray of the screening device;
Figure 4A and 4B depict perspective views of an interior of the screening device;
Figure 5A and 5B depict a perspective view of the interior of the screening device while screening a person;
Figure 6A and 6B depict a highly schematic top view of a passenger and hand luggage screening system;
Figures 7A - 7C depict top view of screening device;
Figure 8A and 8B depict perspective views of an arrangement of screening devices; and
Figure 9 depicts a side view of a hand luggage screening system.

It is noted that throughout the figures, the same or similar reference numerals may be employed, referring to the same or similar features.

### Background

Self-service has become a normal feature of more and more activities in our daily lives and nowhere is the trend toward self-service more evident than in travel. Today, travellers research and plan their own vacations, book their own flights, hotels, transport, restaurants and activities. When they arrive to an airport, they can tag their own checked luggage and print out boarding passes.

Likewise, airport security screening can be made more passenger-centric to allow travellers to manage their journey through the checkpoint. There is also a strong business case driving the use of self-service solutions and extending self-service to security screening for governmental, airport and air carrier stakeholders to drive productivity. These efficiencies in capital investment and reduced staffing requirements achieved from passenger risk segmentation and risk based dynamic screening, increase flexibility for airports' checkpoint design options, automation of detection and alarm resolution capabilities and the integration of new and advanced technology.

Hence, the present development aims at an efficient design of a self-service passenger security environment satisfy the stringent screening requirements; ensuring security outcomes, while delivering a positive, passenger centred experience for large volumes of diverse, multi-lingual and multi-cultural travellers.

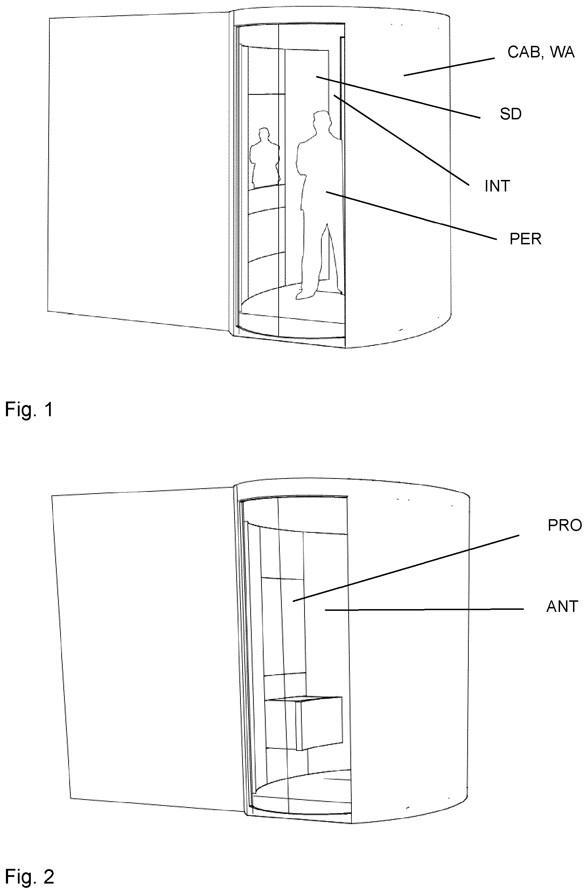

Figure 1 depicts a perspective view of the screening device SD (also denoted as Passenger Self Screening device). The screening device comprising a cabin CAB enclosed by a wall WA forming an interior space INT in which a person PER has entered through a door, in the present case a sliding door SD.

### Technical Concept

The proposed concept may combine intuitive man-machine interfaces, passenger data and advanced technology physical screening to create a concept that can be applicable to all passenger types and threat levels.

A process of screening will be described in the below:

### 1. Passenger Arrival:

Passenger arrives at the checkpoint with carry-on baggage. Interactive signage directs passenger to an available passenger self screening device SD. The passenger presents identification credentials (e.g. a token, such as a passport, boarding pass, facial image or other biometric information) to a reader (identification). The reader verifies the passenger's identity and assigns passenger risk score from Secure Flight data and other relevant sources. Once identity and flight information are authenticated, the reader/user interface indicates to passenger that they are cleared for screening and the entry door of the cabin of the passenger self screening device opens.

### Passenger self screening device design and access control

- Single point passenger self-service screening device,
- Modular design that can be incorporated into groups of passenger self screening devices
- Occupies minimal space
- Hardware screening systems in standard component bays
- High throughput

### Passenger interface graphical user interface (GUI):

- Enables accessible property and on-person self-screening in a simple, clear passenger GUI and screening workflow "Wizard".
- Screen(s) displaying passenger process "Wizard" instructions for self-divesting of threat objects identified by an X-ray or On Person Screening (OPS) Automatic Target Recognition (ATR) algorithm and rescanning, minimizing ATR false alarms.
- Multi-modality TSO touchscreen (or contact-less interface) workstation for process monitoring and alarm resolution.

### Passenger data risk processing and future biometric interface

- Fully enabled and integrated multi-cloud architecture featuring a robust API Gateway with established services
- Real-time KTN validation service through digital identity and identity assurance apps that are integrated with facial matching software for biometric authentication

### 2. Passenger Self-Screening Preparation:

The passenger moves into the cabin CAB of the passenger self-service screening device SD, which is designed to be comfortable, spacious and minimize anxiety or claustrophobia. The passenger self-screening device incorporates video (by means of a video camera) and associated analytics to monitor passenger, communicate that the passenger self- screening device is engaged and identify anomalous behaviour. An interactive screen in the self-screening device communicates screening and divestment process to passenger. Video with audio instruction and signage will provide instruction. Thereto, a projector is provided, e.g. in a ceiling of the cabin, which projects a video image PRO onto a wall of the cabin, as depicted in Figure 2. Figure 2 further schematically depicts antennas ANT of a millimetre wave scanning system forming part of a sensor, to scan the person.

### Video system

- IP camera-based system including multiple cameras for multiple viewpoints to cover all passenger activity within the passenger self- screening device.

### 3. Person Screening:

Upon entering the passenger self- screening device, on-person screening commences. Passenger divest requirements are initially determined by the video analytics system (e.g. coats, outerwear) and the passenger interface screen communicates divest instructions. Additional divestment instructions are communicated to direct passenger to remove and place in the property screening system along with any other items normally divested from the person (phone, keys etc.). A drawer DRW may be opened by the control device to form a hand luggage tray into which the hand luggage (incl. phone, keys, etc.) may be deposited. The passenger is then cued to adopt the scan pose by the video system. Optimal passenger foot position on the floor FRL is also communicated to ensure that footwear screening system FWS can operate effectively. The passenger self- screening device communicates to passenger indicating when divestment and scanning is complete. Then the passenger self- screening device instructs passenger to load belongings into a hand luggage drawer.

### Voxel Radar: In-Motion millimeter wave body imaging

- Screens passenger during the entire process within the passenger self screening device
- Aggregates scan data to utilize optimized illumination and avoid blind spots

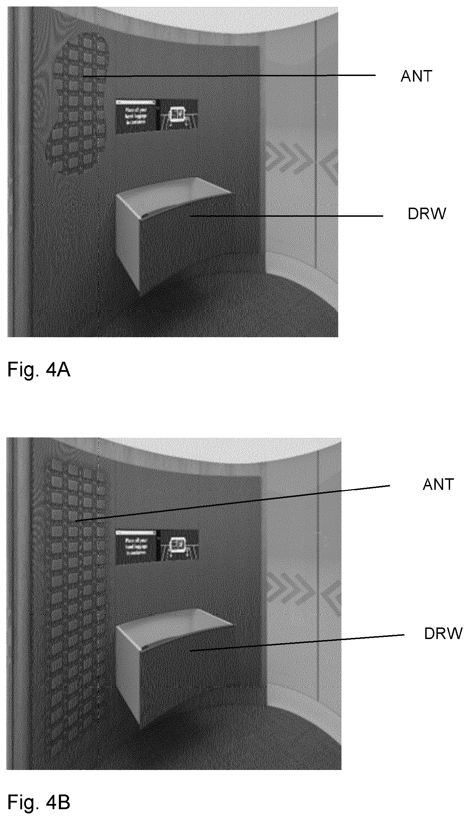

A concept of the interior of the passenger self screening device showing the possible location of the sensor antennas ANT is shown in Figures 4A and 4B.

Figure 4A and 4B: The interior of the passenger self screening device showing the personnel screening system.

The control device may be configured to operate the footwear sensor to sense the footwear of the person, and to drive the projector to project instructions to the person, associated with the operating of the footwear sensor.

The control device may control the footwear sensor to start a scan of the footwear of the person once the person has entered the cabin (i.e. the inner space) of the passenger self screening device. For example, if a measurement by the footwear sensor, e.g. an NQR measurement, takes a longer time than a scanning of the person, e.g. by mm wave measurement, the control device may control the footwear sensor to start sensing while the passenger is still preparing for the scan, e.g. putting their belongings into the tray and/or reading instructions provided via the projector.

### 4. On-Person Alarm Resolution:

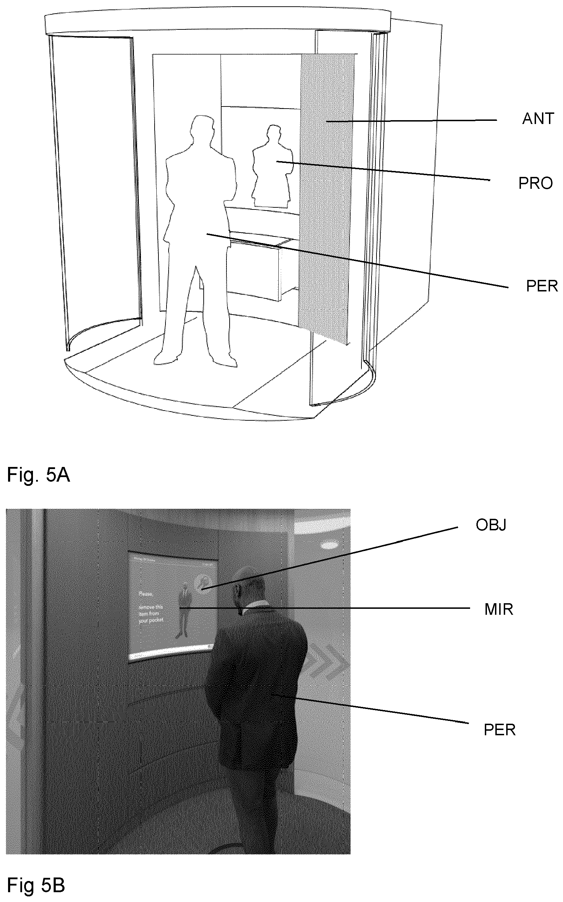

To support passenger self-resolution of on-person alarms, the system's passenger interface indicates to passenger the location of an alarm and instructs passenger PER to remove alarm item or shoes and place them into the hand luggage (property) screener. The projector projects an artificial reality mirror on the wall of the cabin. The alarm item OBJ is indicated in the displayed artificial realty mirror PRO, as depicted in Figures 5A and 5B. Once alarm items or shoes have been put in the property screener, another scan is initiated of both the person and belongings. If the scans are clear, on-person screening is completed. The video system monitors passenger actions to ensure compliance with divest requirements and to detect anomalous behaviour.

### 5. Property Screening:

Property screening procedures are directed by the passenger self screening device interface. The passenger is directed to place all accessible property into the property screener with other divest items. The passenger self screening device property screener consists of a primary screening system sensor and an automated alarm resolution capability. Both are initiated when the door of the property screener has been closed and will lock during screening. The video system monitors that all items have been placed into the property screening system. The passenger interface informs the passenger of the property scan progress and status. If the accessible property systems and automatic threat recognition (ATR) do not detect threats, prohibited items or explosives the passenger can collect belongings. The passenger self screening device interface indicates to the passenger that they are cleared to proceed to gate and passenger self screening device door opens automatically.

### Static CT primary accessible property screening system.

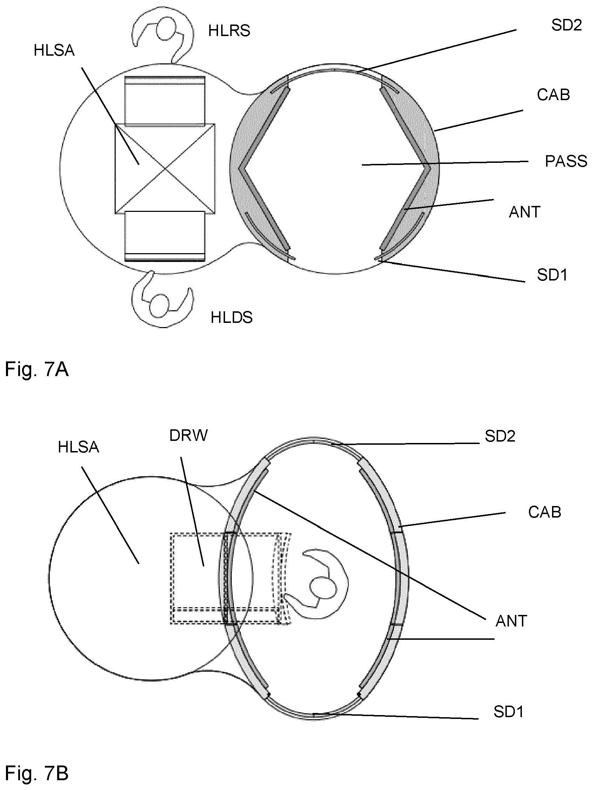

Figure 7A - 7C depicts 3 examples of possible configurations, whereby the cabin forms a passage between the entry side for to be screened passengers and exit side for screened passengers. The entry side of the cabin can be closed by sliding door SD1, the exit side by sliding door SD2. Once a passenger has identified himself and entered, the sliding door SD1 closes. The sliding door SD2 remains closed until the screening has been completed and no alarm generated. In Figure 7A, a hand luggage depositing station HLDS is provided at the entry side, while the passenger may reclaim the hand luggage after having been screened and left the cabin at exit door SD2 to reclaim the hand luggage at hand luggage reclaiming station HLRS. A hand luggage scanning apparatus HLSA is provided between the depositing station and reclaiming station, e.g. adjacent to the cabin to scan the hand luggage while the passenger is screened in the cabin.

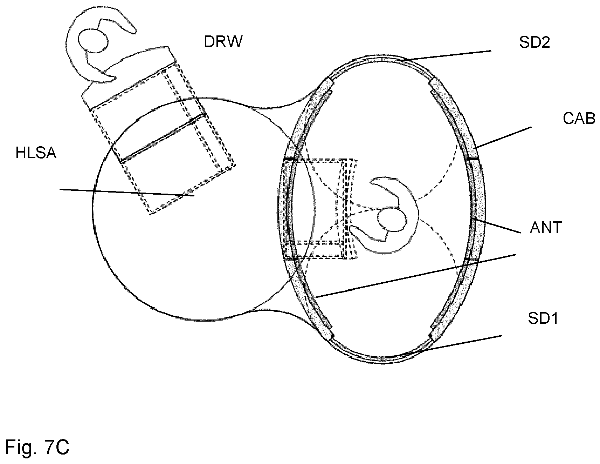

Figure 7B depicts a similar arrangement, whereby the passenger takes the hand luggage into the cabin, to be deposited into the drawer DRW. The hand luggage screening apparatus HLSA is arranged adjacent to the cabin, and fed with the hand luggage from the drawer by a conveyor. Once screened the hand luggage is conveyed back to the drawer to be recollected by the passenger before exiting the cabin via the exit at sliding door SD2. Figure 7C depicts a variant to the embodiment of Figure 7B, whereby the passenger takes the hand luggage into the cabin, to be deposited into the drawer DRW. The hand luggage screening apparatus HLSA is arranged adjacent to the cabin, and fed with the hand luggage from the drawer by a conveyor. Once screened the hand luggage is conveyed to a reclaiming station (e.g. drawer) outside of the cabin, at the exit side, to be recollected by the passenger after exiting the cabin via the exit at sliding door SD2. Hence, once the screening has been completed, the passenger is requested to exit the cabin, thus enabling entry of a following person via the entry at SD1 to commence scanning a following passenger, while the passenger that has just left the cabin can recollect the hand luggage at ease.

### 6. Property Alarm Resolution:

To resolve alarms in passengers' belongings, the passenger self screening device interface identifies the item to passenger and instructs them to remove the item(s). The item is placed next to the bag in the scanner and the scan is repeated. Once bag and the item are cleared, the passenger is instructed to retrieve all items from the property screening and to proceed to gate.

If the bag and/or the item(s) cannot be cleared, the system automatically alerts an operator who is immediately dispatched to the passenger self screening device to conduct further alarm resolution procedures.

The screening device may comprise:
- a hand luggage screening apparatus configured to scan the hand luggage deposited by the person, wherein the hand luggage screening apparatus comprises a primary scanner and an X-ray diffraction scanner, and
   wherein the control device is configured to operate the hand luggage screening apparatus to
- scan the hand luggage by the primary scanner to generate primary scanner output data associated with the scan of the hand luggage,
- determine an area of interest of the hand luggage from the primary scanner output data,
- operate the X-ray diffraction scanner to scan the area of interest of the hand luggage to generate X-ray diffraction output data associated with the scan of the hand luggage by the X-ray diffraction scanner,
- process the primary scanner output data and the X-ray diffraction output data to determine if an alarm signal is to be generated, and
- output the alarm signal if generated.

### 7. Passenger Departure:

Passenger departs for their journey; passenger self screening device is free to screen the next passenger.

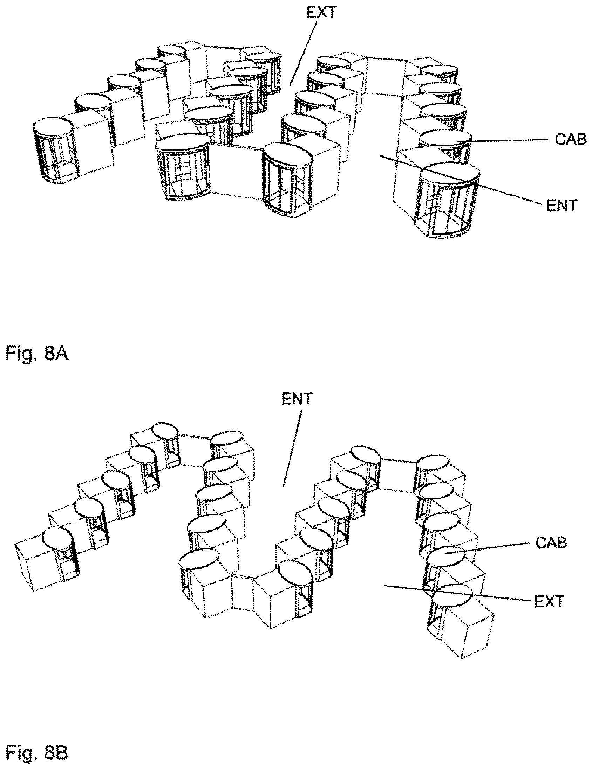

Arrangements of plural screening devices, such as depicted and described with reference to Figures 7A - 7C, are depicted in a front view Figure 8A and rear view Figure 8B. The screening devices are connected against each other to form a chain whereby the exit doors of the cabins discharge into an exit side EXT while the entry doors of the cabins all connect to the entry side ENT. As depicted in Figures 8A and 8B, the chain of screening devices meanders, so as to reduce a total required floorspace.

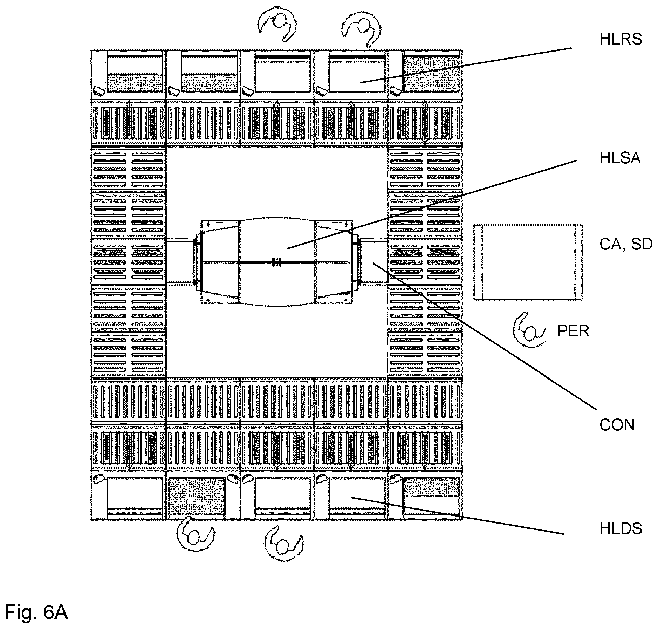

Figure 6A depicts a cabin of a screening device SD and a hand luggage screening apparatus HLSA. The cabin and hand luggage screening apparatus are provided with plural hand luggage drop of stations HLDS at the entry side of the cabin and plural hand luggage reclaiming stations HLRS at the exit side of the cabin. A conveyor conveys the hand luggage from the depositing stations to the reclaiming stations. The hand luggage screening apparatus may be bi-directional, i.e. hand luggage may be fed from left to fight or vice versa (seen in the plane of the drawing). The conveyor connects both entries/exits of the hand luggage screening apparatus to the depositing stations and reclaiming stations to increase conveying capacity. Due to the bi-directional nature, in case a screening of a tray is to be repeated (e.g. on operator instructions), the bidirectional conveyor may convey the tray back into the hand luggage screening apparatus. As the hand luggage depositing and the hand luggage reclaiming may each take more time than the screening of the hand luggage respectively the screening of the person, a capacity of the hand luggage screening apparatus and a capacity of the screening cabin CA of the screening device SD may hence be used more efficiently, while enabling the persons to depositing the hand luggage and reclaim the and luggage at ease. Instead of the single screening device, i.e. cabin CA, a chain of screening devices may be employed, as depicted in and described with reference to Figures 8A and 8B. The passenger may thereby proceed from the hand luggage drop of stations for drop of of the hand luggage, to the entry side of the chain of screening devices, and after having been screened by one of the screening devices, the passenger may proceed from the exit side of the chain of screening devices to the hand luggage reclaiming stations for reclaiming the hand luggage.

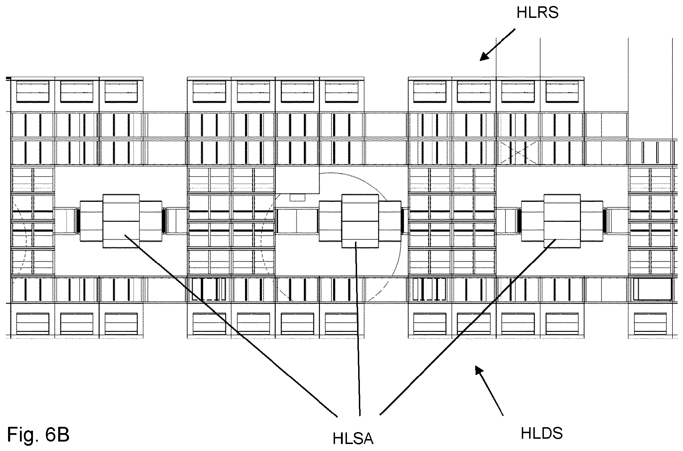

Figure 6B depicts plural hand luggage screening apparatuses HLSA provided with plural hand luggage drop of stations HLDS and plural hand luggage reclaiming stations HLRS. Similarly to Figure 6A, a conveyor connects the entries/exits of each one of the hand luggage screening apparatuses to the depositing stations and reclaiming stations. As the conveyor extends along each one of the hand luggage drop of stations and along each one of the hand luggage reclaiming stations, the hand luggage dropped off at the hand luggage drop off stations may be conveyed by the conveyor to any one of the hand luggage screening apparatuses, e.g. to a nearest one of the hand luggage screening apparatuses in case this hand luggage screening apparatus has sufficient screening capacity available. Thus, the hand luggage may be scanned by any one of the plural hand luggage screening apparatuses, enabling to increase an overall effective capacity, as excess hand luggage dropped off nearest to one of the hand luggage screening devices may be conveyed to another one of the hand luggage screening apparatuses. Similarly, the hand luggage, after having been scanned by one of the hand luggage screening apparatuses, may be conveyed to any one of the hand luggage reclaiming stations.

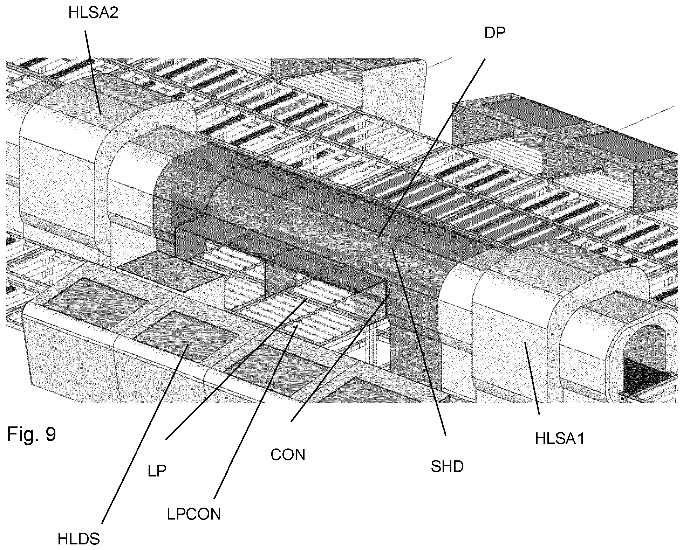

Figure 9 depicts dual hand luggage screening apparatuses HLSA1, HLSA2 whereby a conveyor CON in between them is provided with a shielding SHD to shield X-ray radiation. The conventions lead flaps that may interfere with the hand luggage conveying may be omitted. loading ports LP and exit ports DP having conveying directions LPCON that are perpendicular to the direction between the hand luggage screening apparatuses connect to the depositing HLDS and reclaiming stations and may be provided with lead curtains and loading port screens.

A screening system comprising the screening device may be provided, wherein the screening device is further configured to operate at at least two different detection rates.
a screening system detection rate may be defined, the screening system detection rate defining a required detection rate of the screening system;
one of the detection rates of the screening device may be selected to comply with the screening system detection rate; and
instructions may be sent to the control device of the screening device to operate at the selected detection rate so as to comply with the screening system detection rate.

The detection rates of the screening device may define a detection rate of a security hazard to be detected at the person, the hand luggage and/or the footwear of the person.

## Claims

1. A screening device for screening a person, the screening device comprising:
- a cabin (CAB) comprising a wall (WA) at least partly enclosing an inner space,
- a sensor (ANT) on at least part of the surface of the wall facing the inner space, the sensor being configured to sense the person present in the inner space, and
- a control device connected to the sensor and configured to:
operate the sensor to sense the person residing in the inner space;
**characterized in that** the screening device further comprises a projector (PRO) projecting an image into the inner space to be viewed by the person, wherein the control device is further connected to the projector and configured to drive the projector to project instructions to the person, associated with the operating of the sensor.

2. The screening device according to claim 1, wherein the control device is further configured to
- derive a location of an object on the person from sensor data generated by the sensor, and
- control the projector to display the location of the object on the person.

3. The screening device according to claim 2, wherein the sensor further comprises a camera directed to a desired position of the person in the inner space, the camera being connected to the control device to transit image data to the control device, and wherein the control device is configured to generate a mirror image of the person from the image data, to create a fused image of the person by fusing the object at the derived location into the mirror image of the person and to control the projector to display the fused image of the person.

4. The screening device according to claim 3, wherein the screening device further comprises the camera configured to generate image data, a gesture sensor sensing a gesture of the person and configured to generate gesture data and a motion sensor recording a movement of the person and configured to generate motion data, wherein the control device is configured to perform a risk assessment from a combination of the sensor data, the camera image data, the gesture data and the motion data and to generate a warning message based on the risk assessment.

5. The screening device according to claim 4, wherein the control device is configured to perform the risk assessment using a self-learning system, the self learning system preferably having been trained using a training dataset additionally comprising operator assessment responsive to the sensor data, camera image data, gesture data and motion data.

6. The screening device according to any one of the preceding claims, further comprising a footwear sensor on at least part of the surface of a floor of the cabin, the footwear sensor being configured to sense the person's footwear present in the inner space, wherein preferably the control device is further configured to operate the footwear sensor to sense the footwear of the person, and to drive the projector to project instructions to the person, associated with the operating of the footwear sensor.

7. The screening device according to any one of the preceding claims, wherein the control device is configured to
- establish a connection to an operator console,
- output an instruction to an operator at the operator console to communicate to the person, and
- control the projector to display an image of the operator at the operator console, wherein preferably the control device is configured to
- derive from the sensor data a location of an object on the person,
- transmit the location of the object on the person to the operator console, and
- transmit instructions to the operator console requesting the operator to explain to the person the location of the object, wherein preferably the control device is configured to output the instruction to the operator in case a criterion is fulfilled, the criterion comprising at least one of:
- the person initiating an operator contact request,
- the control device establishing that a pre-set screening time has elapsed,
- the control device establishing that a presence of an object has been established.

8. The screening device according to any one of the preceding claims, wherein the sensor comprises a radio wave scanner comprising a radio wave antenna array, the radio wave antenna array covering at least part of the surface of the wall behind the projected image, and/or wherein the projector is configured to project a two dimensional image on the wall of the cabin or a three dimensional image in the inner space.

9. The screening device according to any one of the preceding claims, further comprising an object depositing tray and wherein the instructions comprise instructions to deposit an object in the object depositing tray, the screening device preferably further comprising a hand luggage screening apparatus (HLSA), and a conveyor (CON) to convey a hand luggage from the cabin to the hand luggage screening apparatus, the control device being configured to drive the conveyor to convey the hand luggage deposited in the object depositing tray to the hand luggage screening apparatus, to drive the hand luggage screening apparatus to screen the hand luggage, and drive the conveyor to convey the hand luggage back into the cabin, wherein preferably the screening device further comprises an identification device, the control device being configured to identify the person using identification data from the identification device, and associate the depositing tray to the identified person.

10. The screening device according to any one of the preceding claims, wherein the control device is configured to drive a display device to provide instructions to the person to adhere to a predetermined screening sequence, wherein preferably the sensor further comprises a camera directed to a desired position of the person in the inner space, the camera being connected to the control device to transit image data to the control device, the control device is configured to process an image from the camera to derive a progress of the screening of the person therefrom, to compare the derived progress of the screening to the predetermined screening sequence, and to derive the instructions provided to the person from the comparison of the derived progress to the predetermined screening sequence.

11. The screening device according to any one of the preceding claims, further comprising
- a hand luggage screening apparatus (HLSA) configured to scan the hand luggage deposited by the person, wherein the hand luggage screening apparatus comprises a primary scanner and an X-ray diffraction scanner, and
wherein the control device is configured to operate the hand luggage screening apparatus to
- scan the hand luggage by the primary scanner to generate primary scanner output data associated with the scan of the hand luggage,
- determine an area of interest of the hand luggage from the primary scanner output data,
- operate the X-ray diffraction scanner to scan the area of interest of the hand luggage to generate X-ray diffraction output data associated with the scan of the hand luggage by the X-ray diffraction scanner,
- process the primary scanner output data and the X-ray diffraction output data to determine if an alarm signal is to be generated, and
- output the alarm signal if generated.

12. The screening device according to any one of the preceding claims, further comprising:
a first identification station configured to request a person to present a token,
a hand luggage depositing station configured to collect hand luggage deposited by the person,
the first identification station being associated with the hand luggage depositing station,
a hand luggage screening apparatus (HLSA) configured to screen the hand luggage
a hand luggage reclaiming station (HLRS), downstream of the hand luggage screening apparatus,
configured to reclaim the hand luggage deposited by the person,
a second identification station being associated with the hand luggage reclaiming station,
the screening device forming a passage for the person from the hand luggage depositing station to the hand luggage reclaiming station, and
a hand luggage conveying system (CON) configured to convey the hand luggage from the hand luggage depositing station via the hand luggage screening apparatus to the hand luggage reclaiming station,
the control device further being configured to:
read the token presented by the person at the first identification station;
associate the presented token to the hand luggage deposited by the person at the hand luggage depositing station;
upon the person having been screened by the screening device, read the token presented by the person at the second identification station at the reclaiming station,
control the hand luggage conveying system to convey the hand luggage associated with the token to the hand luggage reclaiming station.

13. The screening device according to claim 12, comprising
plural hand luggage reclaiming stations, and
wherein the control device is configured to designate one of the plural hand luggage reclaiming stations to the token, to control the hand luggage conveying system to convey the hand luggage associated with the token to the designated one of the plural hand luggage reclaiming stations and to output instructions to the person having passed the screening device and presenting the token to collect the hand luggage associated with the token at the designated one of the plural hand luggage reclaiming stations.

14. The screening device according to claim 12 or 13, wherein the screening device further comprises the object depositing tray and wherein the control device is configured to control the hand luggage conveying system to convey the object deposited in the object depositing tray to the designated one of the plural hand luggage reclaiming stations.

15. The screening device according to any one of claims 12 - 14 comprising a hand luggage depositing station (HLDS), a hand luggage reclaiming station, a first hand luggage screening apparatus (HLSA1), a second hand luggage screening apparatus (HLSA2) and the hand luggage conveying system (CON) to convey the hand luggage from the hand luggage depositing station to either one of the first and the second hand luggage screening apparatuses and from to either one of the first and the second hand luggage screening apparatuses to the hand luggage reclaiming station, wherein the conveying system comprises a shielded hand luggage conveying path extending between the first and second hand luggage screening apparatuses, wherein the hand luggage depositing station loads into the shielded hand luggage conveying path via a loading port (LP) having a conveying direction perpendicular to a loading conveying direction between the first and second hand luggage screening apparatuses (HLSA1, HLSA2), wherein the shielded hand luggage conveying path discharges to the hand luggage reclaiming station via a discharging port (DP) having a discharging conveying direction perpendicular to a conveying direction between the first and second hand luggage screening apparatuses and wherein radiation shields (SHD) configured to shield radiation generated by the first and second hand luggage screening apparatuses are arranged at the loading port and at the discharging port, wherein the screening device preferably further comprises at least one of:
- the radiation shields are lead curtains;
- shielding flaps at the first and second hand luggage screening apparatuses are omitted;
- the loading port comprises a loading port shield extending along the loading direction and wherein the discharging port comprise a discharging port shield extending along the discharging direction; and
- the first and second hand luggage screening apparatuses are bi-directional and wherein the shielded hand luggage conveying path is bi-directional.

16. A method of operating a screening system comprising the screening device according to any one of the preceding claims,
wherein the screening device is further configured to operate at at least two different detection rates,
the method comprising:
- defining a screening system detection rate, the screening system detection rate defining a required detection rate of the screening system;
- selecting one of the detection rates of the screening device to comply with the screening system detection rate; and
- sending instructions to the control device of the screening device to operate at the selected detection rate so as to comply with the screening system detection rate, wherein preferably the detection rates of the screening device define a detection rate of a security hazard to be detected at the person, the hand luggage and/or the footwear of the person.

## Patentansprüche

1. Kontrollvorrichtung zum Kontrollieren einer Person, wobei die Kontrollvorrichtung Folgendes umfasst:
- eine Kabine (CAB), die eine Wand (WA) umfasst, die einen Innenraum mindestens teilweise umschließt,
- einen Sensor (ANT) auf mindestens einem Teil der Oberfläche der Wand, die dem Innenraum zugewandt ist, wobei der Sensor dazu ausgelegt ist, die in dem Innenraum vorhandene Person zu erfassen, und
- eine Steuervorrichtung, die mit dem Sensor verbunden ist und ausgelegt ist zum:
Betreiben des Sensors, um die in dem Innenraum befindliche Person zu erfassen;
**dadurch gekennzeichnet, dass** die Kontrollvorrichtung ferner einen Projektor (PRO) umfasst, der in den Innenraum ein Bild projiziert, das von der Person betrachtet werden soll, wobei die Steuervorrichtung ferner mit dem Projektor verbunden und dazu ausgelegt ist, den Projektor anzusteuern, um dem Betrieb des Sensors zugeordnete Anweisungen an die Person zu projizieren.

2. Kontrollvorrichtung nach Anspruch 1, wobei die Steuervorrichtung ferner ausgelegt ist zum:
- Ableiten eines Orts eines Objekts an der Person aus Sensordaten, die durch den Sensor erzeugt werden, und
- Steuern des Projektors, um den Ort des Objekts an der Person anzuzeigen.

3. Kontrollvorrichtung nach Anspruch 2, wobei der Sensor ferner eine Kamera umfasst, die auf eine gewünschte Position der Person in dem Innenraum gerichtet ist, wobei die Kamera mit der Steuervorrichtung verbunden ist, um Bilddaten zu der Steuervorrichtung zu übertragen, und wobei die Steuervorrichtung dazu ausgelegt ist, aus den Bilddaten ein Spiegelbild der Person zu erzeugen, durch Verschmelzen des Objekts an dem abgeleiteten Ort mit dem Spiegelbild der Person ein verschmolzenes Bild der Person zu erzeugen und den Projektor zum Anzeigen des verschmolzenen Bilds der Person zu steuern.

4. Kontrollvorrichtung nach Anspruch 3, wobei die Kontrollvorrichtung ferner die Kamera, die dazu ausgelegt ist, Bilddaten zu erzeugen, einen Gestensensor, der eine Geste der Person erfasst und dazu ausgelegt ist, Gestendaten zu erzeugen, und einen Bewegungssensor, der eine Bewegung der Person aufzeichnet und dazu ausgelegt ist, Bewegungsdaten zu erzeugen, umfasst, wobei die Steuervorrichtung dazu ausgelegt ist, aus einer Kombination der Sensordaten, der Kamerabilddaten, der Gestendaten und der Bewegungsdaten eine Risikobewertung auszuführen und basierend auf der Risikobewertung eine Warnmeldung zu generieren.

5. Kontrollvorrichtung nach Anspruch 4, wobei die Steuervorrichtung dazu ausgelegt ist, die Risikobewertung unter Verwendung eines selbstlernenden Systems durchzuführen, wobei das selbstlernende System vorzugsweise unter Verwendung eines Trainingsdatensatzes trainiert worden ist, der zusätzlich eine Bedienerbewertung als Reaktion auf die Sensordaten, die Kamerabilddaten, die Gestendaten und die Bewegungsdaten umfasst.

6. Kontrollvorrichtung nach einem der vorhergehenden Ansprüche, die ferner einen Schuhwerksensor auf mindestens einem Teil der Oberfläche eines Bodens der Kabine umfasst, wobei der Schuhwerksensor dazu ausgelegt ist, das in dem Innenraum vorhandene Schuhwerk der Person zu erfassen, wobei die Steuervorrichtung vorzugsweise ferner dazu ausgelegt ist, den Schuhwerksensor zu betreiben, um das Schuhwerk der Person zu erfassen, und den Projektor anzusteuern, um an die Person Anweisungen zu projizieren, die dem Betrieb des Schuhwerksensors zugeordnet sind.

7. Kontrollvorrichtung nach einem der vorhergehenden Ansprüche, wobei die Steuereinheit ferner ausgelegt ist zum:
- Herstellen einer Verbindung mit einer Bedienungskonsole,
- Ausgeben einer Anweisung an einen Bediener an der Bedienungskonsole, um mit der Person zu kommunizieren, und
- Steuern des Projektors, um ein Bild des Bedieners an der Bedienungskonsole anzuzeigen, wobei die Steuervorrichtung vorzugsweise ausgelegt ist zum
- Ableiten eines Ort eines Objekts an der Person aus den Sensordaten,
- Übertragen des Orts des Objekts an der Person an die Bedienungskonsole, und
- Übertragen von Anweisungen, die den Bediener auffordern, der Person den Ort des Objekts zu erklären, an die Bedienungskonsole, wobei die Steuervorrichtung vorzugsweise dazu ausgelegt ist, die Anweisung an den Bediener auszugeben, falls ein Kriterium erfüllt ist, wobei das Kriterium mindestens eines der Folgenden umfasst:
- die Person initiiert eine Bedienerkontaktanforderung,
- die Steuervorrichtung stellt fest, dass eine im Voraus festgelegte Kontrolldauer verstrichen ist;
- die Steuervorrichtung stellt fest, dass eine Anwesenheit eines Objekts festgestellt worden ist.

8. Kontrollvorrichtung nach einem der vorhergehenden Ansprüche, wobei der Sensor eine Funkwellenabtasteinrichtung umfasst, die ein Funkwellenantennenarray umfasst, wobei das Funkwellenantennenarray mindestens einen Teil der Oberfläche der Wand hinter dem projizierten Bild bedeckt und/oder wobei der Projektor dazu ausgelegt ist, ein zweidimensionales Bild auf die Wand der Kabine oder ein dreidimensionales Bild in den Innenraum zu projizieren.

9. Kontrollvorrichtung nach einem der vorhergehenden Ansprüche, die ferner eine Objektablageschale umfasst und wobei die Anweisungen Anweisungen zum Ablegen eines Objekts in der Objektablageschale umfassen, wobei die Kontrollvorrichtung vorzugsweise ferner ein Handgepäckkontrollgerät (HLSA) und einen Förderer (CON), um ein Handgepäck von der Kabine zu dem Handgepäckkontrollgerät zu befördern, umfasst, wobei die Steuervorrichtung dazu ausgelegt ist, den Förderer anzusteuern, um das in der Objektablageschale abgelegte Handgepäck zu dem Handgepäckkontrollgerät zu befördern, das Handgepäckkontrollgerät anzusteuern, um das Handgepäck zu kontrollieren, und den Förderer anzusteuern, um das Handgepäck zurück in die Kabine zu befördern, wobei die Kontrollvorrichtung vorzugsweise ferner eine Identifizierungsvorrichtung umfasst, wobei die Steuervorrichtung dazu ausgelegt ist, die Person unter Verwendung von Identifizierungsdaten von der Identifizierungsvorrichtung zu identifizieren und die Ablageschale der identifizierten Person zuzuordnen.

10. Kontrollvorrichtung nach einem der vorhergehenden Ansprüche, wobei die Steuervorrichtung dazu ausgelegt ist, eine Anzeigevorrichtung anzusteuern, um der Person Anweisungen zum Einhalten einer vorbestimmten Kontrollsequenz bereitzustellen, wobei der Sensor vorzugsweise ferner eine Kamera umfasst, die auf eine gewünschte Position der Person im Innenraum gerichtet ist, wobei die Kamera mit der Steuervorrichtung verbunden ist, um Bilddaten zu der Steuervorrichtung zu übertragen, wobei die Steuervorrichtung dazu ausgebildet ist, ein Bild von der Kamera zu verarbeiten, um daraus einen Fortschritt des Kontrollierens der Person abzuleiten, um den abgeleiteten Fortschritt des Kontrollierens mit der vorbestimmten Kontrollsequenz zu vergleichen und um die der Person bereitgestellten Anweisungen aus dem Vergleich des abgeleiteten Fortschritts mit der vorbestimmten Kontrollsequenz abzuleiten.

11. Kontrollvorrichtung nach einem der vorhergehenden Ansprüche, die ferner Folgendes umfasst:
- ein Handgepäckkontrollgerät (HLSA), das dazu ausgelegt ist, das von der Person abgelegte Handgepäck abzutasten, wobei das Handgepäckkontrollgerät eine primäre Abtasteinrichtung und eine Röntgenbeugungsabtasteinrichtung umfasst, und
wobei die Steuervorrichtung dazu ausgelegt ist, das Handgepäckkontrollgerät zu Folgendem zu betreiben:
- Abtasten des Handgepäcks durch die primäre Abtasteinrichtung, um Ausgangsdaten der primären Abtasteinrichtung zu erzeugen, die dem Abtasten des Handgepäcks zugeordnet sind;
- Bestimmen eines interessierenden Bereichs des Handgepäcks aus den Ausgangsdaten der primären Abtasteinrichtung,
- Betreiben der Röntgenbeugungsabtasteinrichtung, um den interessierenden Bereich des Handgepäcks abzutasten, um Röntgenbeugungsausgangsdaten zu erzeugen, die dem Abtasten des Handgepäcks durch die Röntgenbeugungsabtasteinrichtung zugeordnet sind;
- Verarbeiten der Ausgangsdaten der primären Abtasteinrichtung und der Röntgenbeugungsausgangsdaten, um zu bestimmen, ob ein Alarmsignal erzeugt werden soll, und
- Ausgeben des Alarmsignals, falls es erzeugt wird.

12. Kontrollvorrichtung nach einem der vorhergehenden Ansprüche, die ferner Folgendes umfasst:
eine erste Identifizierungsstation, die dazu ausgelegt ist, eine Person aufzufordern, einen Beweis vorzulegen,
eine Handgepäckablagestation, die dazu ausgelegt ist, von der Person abgelegtes Handgepäck abzuholen,
wobei die erste Identifizierungsstation der Handgepäckablagestation zugeordnet ist,
ein Handgepäckkontrollgerät (HLSA), das dazu ausgelegt ist, das Handgepäck zu kontrollieren,
eine Handgepäckrückforderungsstation (HLRS) ausgangsseitig des Handgepäckkontrollgeräts,
die ausgelegt ist, das von der Person abgelegte Handgepäck zurückzufordern, eine zweite Identifizierungsstation, die der Handgepäckrückforderungsstation zugeordnet ist,
wobei die Kontrollvorrichtung einen Durchgang für die Person von der Handgepäckablagestation zu der Handgepäckrückforderungsstation bildet, und
ein Handgepäckfördersystem (CON), das dazu ausgelegt ist, das Handgepäck von der Handgepäckablagestation über das Handgepäckkontrollgerät zu der Handgepäckrückforderungsstation zu befördern,
wobei die Steuervorrichtung ferner ausgelegt ist zum:
Lesen des von der Person an der ersten Identifizierungsstation vorlegten Beweises;
Zuordnen des vorgelegten Beweises zu dem von der Person an der Handgepäckablagestation abgelegten Handgepäck;
Lesen des von der Person an der zweiten Identifizierungsstation vorgelegten Beweises an der Rückgewinnungsstation, nachdem die Person von der Kontrollvorrichtung kontrolliert worden ist,
Steuern des Handgepäckfördersystems, um das dem Beweis zugeordnete Handgepäck zu der Handgepäckrückforderungsstation zu befördern.

13. Kontrollvorrichtung nach Anspruch 12, die Folgendes umfasst:
mehrere Handgepäckrückforderungsstationen, und
wobei die Steuervorrichtung dazu ausgelegt ist, eine der mehreren Handgepäckrückforderungsstationen für den Beweis zu bestimmen, um das Handgepäckfördersystem zum Befördern des dem Beweis zugeordneten Handgepäcks zu der bestimmten einen der mehreren
Handgepäckrückforderungsstationen zu steuern und an die Person, die die Kontrollvorrichtung passiert hat und den Beweis vorlegt, Anweisungen auszugeben, um das dem Beweis zugeordnete Handgepäck an der bestimmten einen der mehreren Handgepäckrückforderungsstationen abzuholen.

14. Kontrollvorrichtung nach Anspruch 12 oder 13, wobei die Kontrollvorrichtung ferner die Objektablageschale umfasst und wobei die Steuervorrichtung dazu ausgelegt ist, das Handgepäckfördersystem zum Befördern des in der Objektablageschale abgelegten Objekts zu der bestimmten einen der mehreren Handgepäckrückforderungsstationen zu steuern.

15. Kontrollvorrichtung nach einem der Ansprüche 12 - 14, die eine Handgepäckablagestation (HLDS), eine Handgepäckrückforderungsstation, ein erstes Handgepäckkontrollgerät (HLSA1),
ein zweites Handgepäckkontrollkontrollgerät (HLSA2) und das Handgepäckfördersystem (CON) zum Befördern des Handgepäcks von der Handgepäckablagestation entweder zu dem ersten oder zu dem zweiten Handgepäckkontrollkontrollgerät und entweder von dem ersten oder von dem zweiten Handgepäckkontrollkontrollgerät zu der Handgepäckrückforderungsstation umfasst, wobei das Fördersystem einen abgeschirmten Handgepäckförderweg umfasst, der sich zwischen dem ersten und dem zweiten Handgepäckkontrollkontrollgerät erstreckt, wobei die Handgepäckablagestation über eine Ladeöffnung (LP), die eine Förderrichtung senkrecht zu einer Ladeförderrichtung zwischen dem ersten und dem zweiten Handgepäckkontrollgerät (HLSA1, HLSA2) aufweist, in den abgeschirmten Handgepäckförderweg lädt,
wobei der abgeschirmte Handgepäckförderweg über eine Entladeöffnung (DP), die eine Entladeförderrichtung senkrecht zu einer Förderrichtung zwischen dem ersten und dem zweiten Handgepäckkontrollkontrollgerät aufweist, zu der Handgepäckrückforderungsstation entlädt und wobei an der Ladeöffnung und an der Entladeöffnung Strahlungsabschirmungen (SHD) angeordnet sind, die dazu ausgelegt sind, durch das erste und das zweite Handgepäckkontrollkontrollgerät erzeugte Strahlung abzuschirmen, wobei die Kontrollvorrichtung vorzugsweise ferner mindestens eines der Folgenden umfasst:
- dass die Strahlungsabschirmungen Bleivorhänge sind;
- dass die Abschirmklappen an dem ersten und an dem zweiten Handgepäckkontrollgerät weggelassen sind;
- dass die Ladeöffnung eine Ladeöffnungsabschirmung umfasst, die sich entlang der Laderichtung erstreckt, und wobei die Entladeöffnung eine Entladeöffnungsabschirmung umfasst, die sich entlang der Entladerichtung erstreckt; und
- dass das erste und die zweite Handgepäckkontrollgerät bidirektional sind und wobei der abgeschirmte Handgepäckförderweg bidirektional ist.

16. Verfahren zum Betreiben eines Kontrollsystems, das die Kontrollvorrichtung nach einem der vorhergehenden Ansprüche umfasst,
wobei die Kontrollvorrichtung ferner dazu ausgelegt ist, mit mindestens zwei unterschiedlichen Detektionsraten zu arbeiten,
wobei das Verfahren Folgendes umfasst:
- Festlegen einer Kontrollsystemdetektionsrate, wobei die Kontrollsystemdetektionsrate eine erforderliche Detektionsrate des Kontrollsystems festlegt;
- Auswählen einer der Detektionsraten der Kontrollvorrichtung, um der Kontrollsystemdetektionsrate zu entsprechen; und
- Senden von Anweisungen, mit der ausgewählten Detektionsrate zu arbeiten, um der Kontrollsystemdetektionsrate zu entsprechen, an die Steuervorrichtung der Kontrollvorrichtung, wobei die Detektionsraten der Kontrollvorrichtung vorzugsweise eine Detektionsrate einer an der Person, an dem Handgepäck und/oder an dem Schuhwerk der Person zu detektierenden Sicherheitsgefährdung festlegen.

## Revendications

1. Dispositif d'inspection pour inspecter une personne, le dispositif d'inspection comprenant :
- une cabine (CAB) comprenant une paroi (WA) renfermant au moins partiellement un espace interne,
- un capteur (ANT) sur au moins une partie de la surface de la paroi faisant face à l'espace interne, le capteur étant configuré pour capter la personne présente dans l'espace interne, et
- un dispositif de commande connecté au capteur et configuré pour :
faire fonctionner le capteur pour qu'il détecte la personne résidant dans l'espace interne ;
**caractérisé en ce que** le dispositif d'inspection comprend en outre un projecteur (PRO) projetant une image dans l'espace interne destinée à être visualisée par la personne, dans lequel le dispositif de commande est en outre connecté au projecteur et configuré pour entraîner le projecteur à projeter des instructions à la personne, associées au fonctionnement du capteur.

2. Dispositif d'inspection selon la revendication 1, dans lequel le dispositif de commande est en outre configuré pour
- dériver une localisation d'un objet sur la personne à partir de données de capteur générées par le capteur, et
- commander le projecteur pour afficher la localisation de l'objet sur la personne.

3. Dispositif d'inspection selon la revendication 2, dans lequel le capteur comprend en outre une caméra dirigée vers une position souhaitée de la personne dans l'espace interne, la caméra étant connectée au dispositif de commande pour faire transiter des données d'image vers le dispositif de commande, et dans lequel le dispositif de commande est configuré pour générer une image miroir de la personne à partir des données d'image, pour créer une image fusionnée de la personne par fusion de l'objet au niveau de la localisation dérivée dans l'image miroir de la personne et pour commander le projecteur pour afficher l'image fusionnée de la personne.

4. Dispositif d'inspection selon la revendication 3, dans lequel le dispositif d'inspection comprend en outre la caméra configurée pour générer des données d'image, un capteur de geste détectant un geste de la personne et configuré pour générer des données de geste et un capteur de mouvement enregistrant un mouvement de la personne et configuré pour générer des données de mouvement, le dispositif de commande étant configuré pour réaliser une évaluation des risques à partir d'une combinaison des données de capteur, des données d'image de caméra, des données de geste et des données de mouvement et pour générer un message d'avertissement basé sur l'évaluation des risques.

5. Dispositif d'inspection selon la revendication 4, dans lequel le dispositif de commande est configuré pour réaliser l'évaluation des risques en utilisant un système d'auto-apprentissage, le système d'auto-apprentissage ayant de préférence été entraîné à l'aide d'un ensemble de données d'apprentissage comprenant en outre une évaluation d'opérateur sensible aux données de capteur, aux données d'image de caméra, aux données de geste et aux données de mouvement.

6. Dispositif d'inspection selon l'une quelconque des revendications précédentes, comprenant en outre un capteur de chaussures sur au moins une partie de la surface d'un plancher de la cabine, le capteur de chaussures étant configuré pour capter les chaussures de la personne présente dans l'espace interne, dans lequel de préférence le dispositif de commande est configuré en outre pour faire fonctionner le capteur de chaussures pour qu'il capte les chaussures de la personne, et pour entraîner le projecteur à projeter à la personne des instructions associées au fonctionnement du capteur de chaussures.

7. Dispositif d'inspection selon l'une quelconque des revendications précédentes, dans lequel e dispositif de commande est en outre configuré pour
- établir une connexion avec une console d'opérateur,
- fournir en sortie une instruction à un opérateur au niveau de la console d'opérateur pour communiquer avec la personne, et
- commander le projecteur pour afficher une image de l'opérateur au niveau de la console d'opérateur, de préférence le dispositif de commande étant configuré pour
- dériver des données de capteur une localisation d'un objet sur la personne,
- transmettre la localisation de l'objet sur la personne à la console d'opérateur, et
- transmettre des instructions à la console d'opérateur demandant à l'opérateur d'expliquer à la personne la localisation de l'objet, de préférence le dispositif de commande étant configuré pour fournir en sortie l'instruction à l'opérateur en cas de remplissage du critère, le critère comprenant au moins un critère parmi :
- la personne déclenche une demande contact d'opérateur,
- le dispositif de commande établit qu'un temps d'inspection préréglé est écoulé,
- le dispositif de commande établit qu'une présence d'un objet a été établie.

8. Dispositif d'inspection selon l'une quelconque des revendications précédentes, dans lequel le capteur comprend un dispositif d'inspection à ondes radio comprenant un réseau d'antennes à ondes radio, le réseau d'antennes à ondes radio couvrant au moins une partie de la surface de la paroi derrière l'image projetée, et/ou dans lequel le projecteur est configuré pour projeter une image bidimensionnelle sur la paroi de la cabine ou une image tridimensionnelle dans l'espace interne.

9. Dispositif d'inspection selon l'une quelconque des revendications précédentes, comprenant en outre un plateau de dépôt d'objet et dans lequel les instructions comprennent des instructions pour déposer un objet dans le plateau de dépôt d'objet, le dispositif d'inspection comprenant de préférence en outre un appareil d'inspection de bagage à main (HLSA), et un convoyeur (CON) pour convoyer un bagage à main de la cabine à l'appareil d'inspection de bagage à main, le dispositif de commande étant configuré pour entraîner le convoyeur pour convoyer le bagage à main déposé dans le plateau de dépôt d'objet vers l'appareil d'inspection de bagage à main, pour entraîner l'appareil d'inspection de bagage à main pour inspecter le bagage à main, et conduire le convoyeur pour ramener le bagage à main dans la cabine, le dispositif de commande comprenant de préférence en outre un dispositif d'identification, le dispositif de commande étant configuré pour identifier la personne à l'aides données d'identification provenant du dispositif d'identification, et associer le plateau de dépôt à la personne identifiée.

10. Dispositif d'inspection selon l'une quelconque des revendications précédentes, dans lequel le dispositif de commande est configuré pour entraîner un dispositif d'affichage à fournir des instructions à la personne pour adhérer à une séquence d'inspection prédéterminée, dans lequel de préférence le capteur comprend en outre une caméra dirigée vers une position souhaitée de la personne dans l'espace interne, la caméra étant connectée au dispositif de commande pour faire transiter des données d'image vers le dispositif de commande, le dispositif de commande est configuré pour traiter une image de la caméra afin de dériver une progression de l'inspection de la personne à partir de celle-ci, pour comparer la progression dérivée de l'inspection à la séquence d'inspection prédéterminée, et pour dériver les instructions fournies à la personne de la comparaison de la progression dérivée à la séquence d'inspection prédéterminée.

11. Dispositif d'inspection selon l'une quelconque des revendications précédentes, comprenant en outre :
- un appareil d'inspection de bagage à main (HLSA) configuré pour inspecter le bagage à main déposé par la personne, l'appareil d'inspection de bagage à main comprenant un dispositif d'inspection primaire et un dispositif d'inspection par inspection à diffraction de rayons X, et
dans lequel le dispositif de commande est configuré pour faire fonctionner l'appareil d'inspection de bagage à main pour
- inspecter le bagage à main par le dispositif d'inspection primaire pour générer des données de sortie du dispositif d'inspection primaire associées à l'inspection de bagage à main,
- déterminer une zone d'intérêt de bagage à main à partir des données de sortie du dispositif d'inspection primaire,
- faire fonctionner le dispositif d'inspection à diffraction des rayons X pour inspecter la zone d'intérêt de bagage à main afin de générer des données de sortie de diffraction des rayons X associées à l'inspection de bagage à main par le dispositif d'inspection à diffraction des rayons X,
- traiter les données de sortie primaires du dispositif d'inspection et les données de sortie de diffraction des rayons X pour déterminer si un signal d'alarme doit être généré, et
- fournir en sortie le signal d'alarme si généré.

12. Dispositif d'inspection selon l'une quelconque des revendications précédentes, comprenant en outre :
une première station d'identification configurée pour demander à une personne de présenter un jeton,
un poste de dépose de bagage à main configuré pour récupérer le bagage à main déposé par la personne,
la première station d'identification étant associée à la station de dépôt de bagage à main,
un appareil d'inspection de bagage à main (HLSA) configuré pour inspecter le bagage à main,
un poste de récupération de bagage à main (HLRS), en aval de l'appareil d'inspection de bagage à main,
configuré pour récupérer le bagage à main déposé par la personne,
un second poste d'identification étant associé au poste de récupération de bagage à main,
le dispositif d'inspection forme un passage pour la personne du poste de dépôt de bagage à main au poste de récupération de bagage à main, et
un système de convoyage de bagage à main (CON) configuré pour convoyer le bagage à main du poste de dépôt de bagage à main via l'appareil d'inspection de bagage à main vers le poste de récupération de bagage à main,
le dispositif de commande étant en outre configuré pour :
lire le jeton présenté par la personne à la première station d'identification ;
associer le jeton présenté au bagage à main déposé par la personne au poste de dépôt de bagage à main ;
lorsque la personne a été commandée par le dispositif de commande, lire le jeton présenté par la personne au niveau de la seconde station d'identification à la station de récupération,
commander le système de convoyage de bagage à main pour convoyer le bagage à main associé au jeton vers le poste de récupération de bagage à main.

13. Dispositif d'inspection selon la revendication 12, comprenant :
plusieurs postes de récupération de bagage à main, et
dans lequel le dispositif de commande est configuré pour désigner au jeton une des multiples stations de récupération de bagage à main, commander le système de convoyage de bagage à main pour convoyer le bagage à main associé au jeton vers le poste désigné de la pluralité de postes de récupération de bagage à main et fournir en sortie des instructions à l'intention de la personne ayant passé le dispositif de commande et présentant le jeton pour récupérer le bagage à main associé au jeton dans le poste désigné de la pluralité de postes de récupération de bagage à main.

14. Dispositif d'inspection selon la revendication 12 ou la revendication 13, dans lequel le dispositif d'inspection comprend en outre le plateau de dépôt d'objet et dans lequel le dispositif de commande est configuré pour commander le système de convoyage de bagage à main afin de convoyer l'objet déposé dans le plateau de dépôt d'objet vers l'un désigné parmi la pluralité de postes de récupération de bagage à main.

15. Dispositif d'inspection selon l'une quelconque des revendications 12 à 14, comprenant un poste de dépôt de bagage à main (HLDS), un poste de récupération de bagage à main, un premier appareil d'inspection de bagage à main (HLSA1),
un second appareil d'inspection de bagage à main (HLSA2) et le système de convoyage de bagage à main (CON) destinés à convoyer les de bagage à main du poste de dépôt de bagage à main vers l'un ou l'autre des premier et second appareils d'inspection de bagage à main et de l'un ou l'autre des premier et second appareils d'inspection de bagage à main vers le poste de récupération de bagage à main, le système de convoyage comprenant un chemin de convoyage de bagage à main protégé s'étendant entre le premier et le second appareils d'inspection de bagage à main, dans lequel la station de dépôt de bagage à main charge dans le chemin de convoyage protégé de bagage à main via un port de chargement (LP) ayant une direction de convoyage perpendiculaire à une direction de convoyage de chargement entre les premier et second appareils d'inspection de bagage à main (HLSA1, HLSA2),
dans lequel le chemin de convoyage protégé de bagage à main décharge sur la station de récupération de bagage à main via un port de déchargement (DP) ayant une direction de déchargement perpendiculaire à une direction de convoyage entre les premier et second appareils d'inspection de bagage à main et dans lequel des écrans de rayonnement (SHD) configurés pour protéger le rayonnement généré par les premier et second appareils d'inspection de bagage à main sont disposés au niveau du port de chargement et au niveau du port de déchargement, le dispositif d'inspection comprenant en outre de préférence au moins un des éléments suivants :
- les écrans antirayonnement sont des rideaux de plomb ;
- les volets de protection des premier et second appareils d'inspection de bagage à main sont omis ;
- le port de chargement comprend un écran de port de chargement s'étendant le long de la direction de chargement et le port de déchargement comprenant un écran de port de déchargement s'étendant le long de la direction de déchargement ; et
- les premier et second appareils d'inspection de bagage à main sont bidirectionnels et dans lesquels le chemin de convoyage de bagage à main protégé est bidirectionnel.

16. Procédé de fonctionnement d'un système d'inspection comprenant le dispositif d'inspection selon l'une quelconque des revendications précédentes, dans lequel le dispositif d'inspection est en outre configuré pour fonctionner à au moins deux taux de détection différents,
le procédé comprenant :
- la définition d'un taux de détection du système d'inspection, le taux de détection du système d'inspection définissant un taux de détection requis du système d'inspection ;
- la sélection d'un des taux de détection du dispositif d'inspection afin de respecter le taux de détection du système d'inspection ; et
- l'envoi d'instructions au dispositif de commande du dispositif d'inspection pour fonctionner à le taux de détection sélectionné afin de respecter le taux de détection du système d'inspection, le taux de détection du dispositif d'inspection définissant de préférence un taux de détection d'un danger pour la sécurité à détecter chez la personne, le bagage à main et/ou les chaussures de la personne.
